# EUROPEAN PATENT APPLICATION

(11) **EP 4 622 344 A1**
(43) Date of publication of application: **24.09.2025**
(21) Application number: 23920934.9
(22) Date of filing: 25.12.2023
(51) Int. Cl.: H04W 36/00

(54) **DATA TRANSMISSION METHOD AND APPARATUS**

(30) Priority: 08.02.2023 CN 202310122771
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN); GENG, Tingting, Shenzhen, Guangdong 518129 (CN); ZENG, Qinghai, Shenzhen, Guangdong 518129 (CN)
(74) Representative: MERH-IP Matias Erny Reichl Hoffmann Patentanwälte PartG mbB
(86) International application number: PCT/CN2023/141706
(87) International publication number: WO 2024/164745

(57) **Abstract**

This application provides a data transmission method and apparatus, to help a network device perform network optimization for a mobility-related problem in a scenario in which a terminal device has a moving speed in a vertical direction. The method includes: The terminal device determines first information, and sends the first information to a first network device. The first information indicates that a connection failure occurs during movement of the terminal device, and the terminal device has a moving speed in a vertical direction during the movement. The first network device is a network device to which the terminal device is reconnected after the connection failure occurs. The first network device sends second information to a second network device after receiving the first information. The second information includes at least one of a location of the first network device relative to the second network device, a first signal coverage area of the first network device in the vertical direction, signal strength of a second cell in a second time period, and the first information. The second network device receives the second information and performs processing based on the second information.

## Description

This application claims priority to Chinese Patent Application No. 202310122771.7, filed with the China National Intellectual Property Administration on February 8, 2023 and entitled "DATA TRANSMISSION METHOD AND APPARATUS", which is incorporated herein by reference in its entirety.

### TECHNICAL FIELD

Embodiments of this application relate to the communication field, and in particular, to a data transmission method and apparatus.

### BACKGROUND

With rapid development of communication technologies, an operator faces increasingly more challenges in network construction and maintenance. Compared with a previous communication system, a 5th generation (5th generation, 5G) communication system has great advantages, for example, can provide a higher wireless bandwidth, a larger quantity of broadband applications with higher quality, and the like. However, a 5G operator needs to maintain operation in an efficient and low-cost way. Therefore, the 3rd generation partnership project (3rd generation partnership project, 3GPP) proposes a concept of self-organizing network (self-organizing network, SON).

Based on an SON technology, a network can automatically analyze data on the network and complete corresponding network configuration and optimization. The SON includes three parts: self-configuration, self-optimization, and cell outage detection and optimization.

However, with diversification of user requirements and emergence of emerging communication scenarios, the existing SON technology has disadvantages.

### SUMMARY

This application provides a data transmission method and apparatus, to help a network device perform network optimization for a mobility-related problem in a scenario in which a terminal device has a moving speed in a vertical direction.

According to a first aspect, a data transmission method is provided. The method may be performed by a terminal device, may be performed by a component of the terminal device, for example, a processor, a chip, or a chip system of the terminal device, or may be implemented by a logical module or software that can implement all or some functions of the terminal device. The method includes: determining first information, where the first information indicates that a connection failure occurs during movement of the terminal device, and the terminal device has a moving speed in a vertical direction during the movement; and sending the first information to a first network device, where the first network device is a network device to which the terminal device is reconnected after the connection failure occurs.

Based on this solution, the terminal device may send the first information to the first network device, so that the first network device can learn that the terminal device has the moving speed in the vertical direction and the connection failure occurs during the movement. Therefore, the first network device can send, to a network device to which the terminal device is connected before the connection failure occurs, information related to a connection failure scenario, to help the network device to which the terminal device is connected before the connection failure occurs perform network optimization for the scenario.

According to a second aspect, a data transmission method is provided. The method may be performed by a first network device, may be performed by a component of the first network device, for example, a processor, a chip, or a chip system of the first network device, or may be implemented by a logical module or software that can implement all or some functions of the first network device. The method includes: receiving first information from a terminal device, where the first information indicates that a connection failure occurs during movement of the terminal device, and the terminal device has a moving speed in a vertical direction during the movement; and sending second information to a second network device, where the second information includes at least one of a location of the first network device relative to the second network device, a first signal coverage area of the first network device in the vertical direction, signal strength of a second cell in a second time period, and first information; and the second network device is a network device to which the terminal device is connected before the connection failure occurs, the terminal device is located in the first signal coverage area when the connection failure occurs, the second cell is a serving cell to which the terminal device is reconnected after the connection failure occurs, and the second time period includes a moment at which the terminal device is connected to the second cell.

Based on this solution, the first network device receives the first information from the terminal device, and may learn that the terminal device has the moving speed in the vertical direction and the connection failure occurs during movement. Therefore, the first network device sends, to the second network device, second information related to the connection failure scenario, for example, at least one of relative location information of a network device to which the terminal device is connected before and after the connection failure, a signal coverage area in which the terminal device is located when the connection failure occurs, signal strength of a serving cell before the connection failure occurs, and first information, to help the second network device perform network optimization for the scenario.

According to a third aspect, a data transmission method is provided. The method may be performed by a second network device, may be performed by a component of the second network device, for example, a processor, a chip, or a chip system of the second network device, or may be implemented by a logical module or software that can implement all or some functions of the second network device. The method includes: receiving second information from a first network device, where the first network device is a network device to which a terminal device is reconnected after a connection failure occurs, and the second network device is a network device to which the terminal device is connected before the connection failure occurs; and performing processing based on the second information, where the second information includes at least one of a location of the first network device relative to the second network device, a first signal coverage area of the first network device in a vertical direction, signal strength of a second cell in a second time period, and first information; and when the connection failure occurs, the terminal device is located in the first signal coverage area, the second cell is a serving cell to which the terminal device is reconnected after the connection failure occurs, and the second time period includes a moment at which the terminal device is connected to the second cell.

Based on this solution, the second network device may receive, from the first network device, second information related to the connection failure scenario, for example, at least one of relative location information of a network device connected to the terminal device before and after the connection failure, a signal coverage area in which the terminal device is located when the connection failure occurs, signal strength of a serving cell before the connection failure occurs, and first information indicating that the connection failure occurs during movement of the terminal device and that the terminal device has the moving speed in the vertical direction during the movement. Therefore, in a scenario in which the terminal device has the moving speed in the vertical direction, network optimization may be performed on a mobility-related problem based on the second information.

With reference to the first aspect, the second aspect, or the third aspect, in a possible design, the first information includes at least one of location information, moving speed, or height information of the terminal device when the connection failure occurs.

With reference to the first aspect, the second aspect, or the third aspect, in a possible design, the location information includes a location of the terminal device relative to the second network device, and the second network device is a network device to which the terminal device is connected before the connection failure occurs; or the location information includes coordinates of the terminal device in a longitude and latitude coordinate system.

With reference to the first aspect, the second aspect, or the third aspect, in a possible design, the height information includes a height of the terminal device relative to the second network device, or the height information includes an absolute height of the terminal device.

With reference to the first aspect, the second aspect, or the third aspect, in a possible design, the first information includes a moving trajectory of the terminal device.

Based on the possible design, the second network device may analyze, based on the moving trajectory of the terminal device, whether the connection failure occurs because the terminal device moves to an area in which a signal cannot be provided. When the connection failure occurs because the terminal device moves to an area in which a signal cannot be provided, the second network device may perform network optimization based on the cause. When the connection failure is not caused by a case that the terminal device moves to an area in which a signal cannot be provided, the second network device may exclude the case that the connection failure occurs because the terminal device moves to the area in which a signal cannot be provided, to increase a probability that the second network device obtains a correct cause of the connection failure, so that the second network device can perform network optimization based on the correct cause.

With reference to the first aspect, the second aspect, or the third aspect, in a possible design, the first information includes a handover type of last handover of the terminal device. The handover type is vertical handover.

Based on the possible design, the second network device determines, based on the handover type, that a scenario in which the connection failure occurs during movement of the terminal device is that the terminal device has a moving speed in the vertical direction during the movement. For example, the terminal device moves in the vertical direction. In this case, network optimization can be performed based on the scenario, to implement network optimization in a scenario in which the connection failure occurs in a process in which the terminal device moves at the moving speed in the vertical direction.

With reference to the first aspect, the second aspect, or the third aspect, in a possible design, the first information includes signal quality of a first cell in a first time period, the first cell is a serving cell of the terminal device before the connection failure occurs, and an end moment of the first time period is a moment at which the connection failure occurs.

Based on the possible design, the second network device can analyze, based on the signal quality of the first cell in the first time period, whether the connection failure occurs due to signal quality deterioration. When the connection failure occurs due to the signal quality deterioration, the second network device can perform network optimization based on the signal quality of the first cell in the first time period. For example, the second network device may improve the signal quality of the first cell, to ensure normal communication between the terminal device and the second network device subsequently, and avoid the connection failure.

With reference to the first aspect, the second aspect, or the third aspect, in a possible design, the first information includes an identifier of a cell that is in a neighboring cell of the first cell and that satisfies a preset condition.

With reference to the first aspect, the second aspect, or the third aspect, in a possible design, the first information includes a cell triggered list, and the cell triggered list includes an identifier of a cell that satisfies the preset condition.

Based on the possible design, the second network device can analyze, based on a first quantity and a preset quantity threshold, whether the connection failure occurs because the terminal device does not trigger reporting. When the connection failure occurs because the terminal device does not trigger reporting, the second network device may perform network optimization based on the cause in which the terminal device does not trigger reporting. For example, the second network device may reduce a threshold (for example, reduce the preset quantity threshold or reduce duration of TTT) for triggering reporting by the terminal device, to increase frequency of triggering reporting by the terminal device. In this case, the terminal device can report a measurement result in advance, to further avoid the connection failure of the terminal device. When the connection failure is not caused by a case that the terminal device does not trigger reporting, the second network device may exclude the cause in which the terminal device does not trigger reporting, to increase a probability that the second network device obtains a correct cause of the connection failure, so that the second network device can perform network optimization based on the correct cause.

According to a fourth aspect, a communication apparatus is provided, to implement various methods. The communication apparatus may be the terminal device in the first aspect, or an apparatus, for example, a chip or a chip system, included in the terminal device. Alternatively, the communication apparatus may be the first network device in the second aspect, or an apparatus, for example, a chip or a chip system, included in the first network device. Alternatively, the communication apparatus may be the second network device in the third aspect, or an apparatus, for example, a chip or a chip system, included in the second network device. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation of the foregoing aspects. The transceiver module may include a receiving module and a sending module that are respectively configured to implement a receiving function and a sending function in any one of the foregoing aspects and any possible implementation of the foregoing aspects.

In some possible designs, the transceiver module may include a transceiver circuit, a transceiver machine, a transceiver, or a communication interface.

According to a fifth aspect, a communication apparatus is provided, and includes a processor and a memory. The memory is configured to store computer instructions, and when the processor executes the instructions, the communication apparatus is enabled to perform the method according to any one of the aspects. The communication apparatus may be the terminal device in the first aspect, or an apparatus, for example, a chip or a chip system, included in the terminal device. Alternatively, the communication apparatus may be the first network device in the second aspect, or an apparatus, for example, a chip or a chip system, included in the first network device. Alternatively, the communication apparatus may be the second network device in the third aspect, or an apparatus, for example, a chip or a chip system, included in the second network device.

According to a sixth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the aspects. The communication apparatus may be the terminal device in the first aspect, or an apparatus, for example, a chip or a chip system, included in the terminal device. Alternatively, the communication apparatus may be the first network device in the second aspect, or an apparatus, for example, a chip or a chip system, included in the first network device. Alternatively, the communication apparatus may be the second network device in the third aspect, or an apparatus, for example, a chip or a chip system, included in the second network device.

According to a seventh aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor. The communication apparatus may be the terminal device in the first aspect, or an apparatus, for example, a chip or a chip system, included in the terminal device. Alternatively, the communication apparatus may be the first network device in the second aspect, or an apparatus, for example, a chip or a chip system, included in the first network device.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that, when the communication apparatus provided in any one of the fourth aspect to the seventh aspect is a chip, a sending action/function of the communication apparatus may be understood as outputting or sending information, and a receiving action/function of the communication apparatus may be understood as inputting or receiving information.

According to an eighth aspect, a computer-readable storage medium is provided. The computer-readable storage medium stores a computer program or instructions. When the program or the instructions are run on a communication apparatus or a computer, the communication apparatus or the computer is enabled to perform the method according to any one of the aspects.

According to a ninth aspect, a computer program product including instructions is provided. When the computer program product is run on a communication apparatus or a computer, the communication apparatus or the computer is enabled to perform the method according to any one of the aspects.

For technical effects brought by any design manner in the fourth aspect to the ninth aspect, refer to technical effects brought by different design manners in the first aspect, the second aspect, or the third aspect. Details are not described herein again.

### BRIEF DESCRIPTION OF DRAWINGS

FIG. 1 is a schematic flowchart of cell handover according to this application;
FIG. 2 is a diagram of a handover failure recovery mechanism according to this application;
FIG. 3 is a diagram of a signal coverage area of a network device according to this application;
FIG. 4 is a diagram of a structure of a communication system according to this application;
FIG. 5 is a diagram of a structure of a communication apparatus according to this application; and
FIG. 6 is a schematic flowchart of a data transmission method according to this application;
FIG. 7 is a diagram of a signal coverage area of another network device according to this application;
FIG. 8 is a diagram of a first signal coverage area according to this application;
FIG. 9 is a diagram of another first signal coverage area according to this application;
FIG. 10 is a diagram of a structure of another communication apparatus according to this application; and
FIG. 11 is a diagram of a structure of another communication apparatus according to this application.

### DESCRIPTION OF EMBODIMENTS

In description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In various embodiments of this application and the implementations/methods/implementation methods in various embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding of the technical solutions in embodiments of this application, the following first briefly describes technologies related to this application.

### 1. Cell handover (handover):

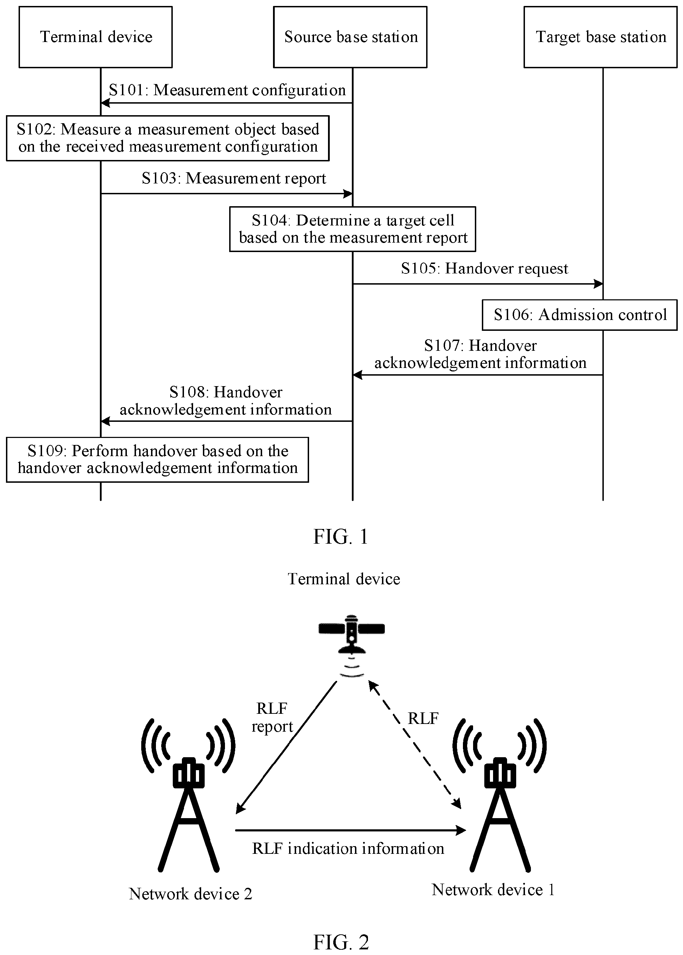

For example, in a 5th generation (5th generation, 5G) or new radio (new radio, NR) system, a cell handover procedure may include steps S101 to S109 shown in FIG. 1.

Step S101: A source base station (which may also be referred to as a serving base station before handover) of a terminal device may send a measurement configuration to the terminal device. Correspondingly, the terminal device receives the measurement configuration from the source base station.

Optionally, the measurement configuration may include a measurement object (for example, a serving cell or a neighboring cell), a trigger event for measurement reporting, and the like.

For example, the trigger event may include an event A1, an event A2, an event A3, an event A4, an event A5, and the like. The event A1 is that signal quality of the serving cell is greater than a first preset threshold. The event A2 is that the signal quality of the serving cell is less than a second preset threshold. The event A3 is that signal quality of the neighboring cell is greater than the signal quality of the serving cell. The event A4 is that the signal quality of the neighboring cell is greater than a third preset threshold. The event A5 is that the signal quality of the serving cell is less than the second preset threshold, and the signal quality of the neighboring cell is greater than the third preset threshold.

Step S102: The terminal device measures the measurement object based on the received measurement configuration.

Optionally, if a measurement result of a measurement object measured by the terminal device in a specific time period satisfies a trigger event for measurement reporting, the terminal device is triggered to perform reporting.

Optionally, in a specific time period, when a measurement result of a cell satisfies the trigger event for measurement reporting, an identifier of the cell may be added to a cell triggered list (cell triggered list).

For example, a specific time period is configured by the source base station. The specific time period may also be referred to as time to trigger (time to trigger, TTT).

The measurement result is a result obtained through measurement at a layer 1 (for example, a physical (physical, PHY) layer) and filtering at a layer 3 (for example, a radio resource control (radio resource control, RRC) layer).

Step S103: The terminal device sends a measurement report to the source base station. Correspondingly, the source base station receives the measurement report from the terminal device.

Step S104: After receiving the measurement report, the source base station determines a target cell based on the measurement report.

For example, the source base station evaluates the measurement result in the measurement report, to determine the target cell.

Step S105: The source base station sends a handover request to a target base station to which the target cell belongs. Correspondingly, the target base station receives the handover request from the source base station.

For example, the handover request includes information required for handover, such as an identifier (identifier, ID) of the target cell.

Step S106: The target base station performs admission control.

Optionally, admission control may be understood as determining whether the terminal device is supported in accessing the target base station.

When the terminal device is supported in accessing the target base station, S107 is performed.

Step S107: The target base station sends handover acknowledgement information to the source base station. Correspondingly, the source base station receives the handover acknowledgement information from the target base station.

For example, the handover acknowledgement information includes RRC reconfiguration (reconfiguration) information (such as the ID of the target cell) related to the target cell.

Step S108: The source base station forwards the handover acknowledgement information to the terminal device. Correspondingly, the terminal device receives the handover acknowledgement information from the source base station.

Step S109: The terminal device performs handover based on the handover acknowledgement information.

For example, the terminal device may perform RRC reconfiguration based on the RRC reconfiguration information. After the RRC reconfiguration is completed, the terminal device sends, to the target base station, information indicating that the RRC reconfiguration succeeds. Correspondingly, the target base station receives, from the terminal device, the information indicating that the RRC reconfiguration succeeds. In this case, it may be considered that the handover of the terminal device on a radio access network (radio access network, RAN) side succeeds.

Optionally, the handover in this application is generally handover, a cell change, or the like controlled by a network device and the terminal device in an RRC connected mode.

### 2. Cell handover of an uncrewed aerial vehicle (uncrewed aerial vehicle, UAV):

As a new type of aircraft, the UAV is popularized because of flexibility and convenience of the UAV. In addition, a cellular network can provide the UAV with features such as wide coverage, high reliability, high security, and continuous mobility.

A communication environment of the UAV is greatly different from that of a traditional terminal device (for example, a mobile phone). The UAV is generally located above a network device, and mainly performs line-of-sight (line-of-sight, LOS) communication. Therefore, compared with a conventional terminal device, the UAV can receive signals of more network devices. In addition, because the network device transmits an electromagnetic wave toward the ground, a signal received by the UAV is usually an electromagnetic wave reflected by the ground or a side lobe of a beam. Therefore, strength of the signal received by the UAV is less than strength of a signal received by the conventional terminal device.

Therefore, if the cell handover of the conventional terminal device is directly applied to the cell handover of the UAV, the UAV performs measurement and reporting more and more frequently during cell handover.

Based on the foregoing phenomenon, a long term evolution (long term evolution, LTE) system and a 5G system enhance the cell handover of the UAV as follows. During cell handover, if a measurement result of a neighboring cell measured by the UAV in TTT satisfies a trigger event for measurement reporting, an identifier of the cell is added to a cell triggered list, and when a quantity of cell identities in the cell triggered list satisfies a preset quantity threshold, the UAV is triggered to perform reporting.

### 3. Connection failure recovery mechanism:

The connection failure recovery mechanism means that when a connection failure occurs on a terminal device, an RRC connection is reestablished (or RRC reestablishment is performed). In other words, the RRC connection between the terminal device and the network device is reestablished, to restore a service connection of the terminal device. The connection failure may include a radio link failure (radio link failure, RLF), a handover failure, and the like.

### 4. Self-organizing network (self-organizing network, SON):

The SON means that a network can automatically analyze data on the network and complete corresponding network configuration and optimization. The SON includes three functions: self-configuration, self-optimization, and cell outage detection and optimization. The self-configuration function may include an interface self-configuration function and a function of automatically updating a neighboring cell. The self-optimization function may include mobility robustness optimization (mobility robustness optimization, MRO), mobility complex balancing, random access optimization, and physical cell identifier (physical cell identifier, PCI) conflict detection and optimization.

For example, the MRO may be used for detecting and correcting the following problems:
a connection failure caused by delayed intra-LTE or intra-NR handover, a connection failure caused by delayed intra-radio access technology (radio access technology, RAT) handover, unnecessary inter-RAT handover, inter-RTA ping-pong (Inter-RAT ping-pong) handover, inter-system ping-pong (Inter-system ping-pong) handover, and the like.

For example, in an MRO technology, as shown in FIG. 2, when an RLF occurs between a terminal device and a network device 1, the terminal device generates an RLF report, and reestablishes an RRC connection (where in FIG. 2, an example in which a connection is established between the terminal device and a network device 2 is used). After establishing the RRC connection to the network device 2, the terminal device sends the RLF report to the network device 2. The network device 2 receives the RLF report from the terminal device, generates RLF indication information, and sends the RLF indication information to the network device 1.

The RLF report may include at least one of the following: a cell global identifier (cell global identifier, CGI) of a last serving cell (or a PCI and a frequency of the cell), a CGI of a cell in which the terminal device attempts to perform RRC reestablishment, a CGI of a cell in which the terminal device is located during last handover initialization, duration from last handover initialization of the terminal device to a connection failure, a cause indicating that a connection failure is an RLF or a handover failure, and a cell radio network temporary identifier (cell radio network temporary identifier, C-RNTI) allocated by a last serving cell to the terminal device, an RLF trigger of a last RLF detected by the terminal device, duration from a connection failure to a time point at which the terminal device sends an RLF report, and a radio measurement quantity.

The RLF indication information may include at least one of the following: a PCI of a cell to which the terminal device is connected before the RLF occurs, a CGI of a cell in which the terminal device attempts to perform RRC reestablishment, a C-RNTI of the terminal device in a cell before the RLF occurs, a short media access control-identifier (short media access control-identifier, short MAC-I), the RLF report, and an RRC reestablishment cause.

In a UAV scenario, because a communication environment in the air is different from a communication environment on the ground, a signal received in a vertical direction decreases sharply during movement of the UAV.

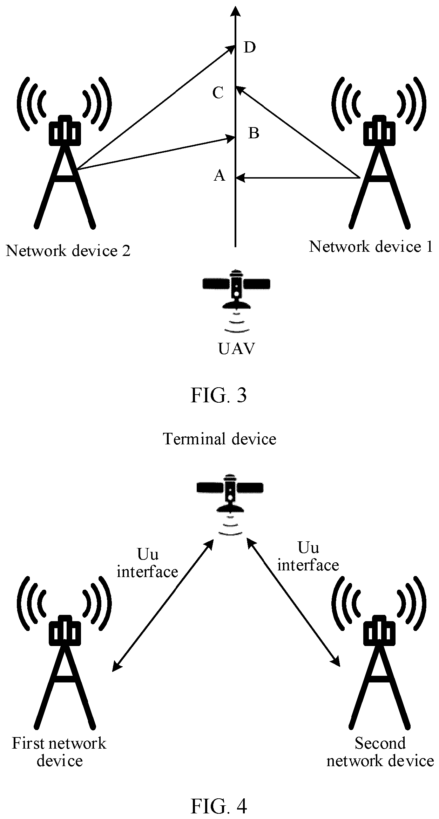

For example, as shown in FIG. 3, an area between a point A and a point C in the vertical direction is a signal coverage area of the network device 1, and an area between a point B and a point D in the vertical direction is a signal coverage area of the network device 2. In a process in which the UAV moves from the point A to the point B, the network device 1 provides a service for the UAV. In a process in which the UAV moves from the point B to the point C, although the UAV can receive signals of both the network device 1 and the network device 2, because signal quality of the network device 1 does not deteriorate, in the process in which the UAV moves from the point B to the point C, the network device 1 still provides a service for the UAV. In a process in which the UAV moves from the point C to the point D, because a location of the UAV is out of the signal coverage area of the network device 1 in this case, the signal quality of the network device 1 suddenly deteriorates. However, in a process in which the signal quality of the network device 1 suddenly deteriorates, the terminal device fails to report a measurement result in advance. Consequently, the network device 1 cannot determine, based on the measurement result in time, that the terminal device needs to be handed over, and a connection failure occurs on the UAV.

However, an existing SON technology is not applied to a scenario in which a connection failure occurs during movement of the UAV. In other words, network optimization cannot be performed in this scenario based on the existing SON technology.

In view of this, this application provides a data transmission method, to help a network device perform network optimization for a mobility-related problem in a scenario in which a terminal device has a moving speed in a vertical direction. Network optimization may include scenario-based detection (for example, cause analysis) and scenario-based optimization.

The technical solutions in embodiments of this application may be applied to various communication systems. The communication system may be a 3rd generation partnership project (3rd generation partnership project, 3GPP) communication system, for example, a 5G system like an LTE system or an NR system, a satellite communication system, a non-terrestrial network (non-terrestrial network, NTN) system, a system in hybrid networking of LTE and 5G, a device-to-device (device-to-device, D2D) communication system, a machine-to-machine (machine-to-machine, M2M) communication system, Internet of Things (Internet of Things, IoT), and a future evolved communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine-type communication (machine-type communication, MTC), massive machine type communication (massive machine type communication, mMTC), D2D, and IoT.

The communication system and the communication scenario applied to this application are merely examples for description. The communication system and the communication scenario applied to this application are not limited thereto. The communication system and the communication scenario provided in this application do not constitute any limitation on the solutions of this application. This is uniformly described herein, and details are not described below again.

FIG. 4 shows an example of a communication system according to this application. The communication system includes at least two network device and at least one terminal device. Optionally, different network devices may communicate with each other.

The at least two network devices may include a first network device and a second network device. The terminal device may be first connected to the second network device, or may be first connected to the second network device. Subsequently, the terminal device encounters a connection failure during movement, reestablishes RRC connection, and is connected to the first network device. In other words, the first network device is a network device to which the terminal device is reconnected after the connection failure occurs, and the second network device is a network device to which the terminal device is connected before the connection failure occurs. The terminal device has a moving speed in a vertical direction during movement.

For example, that the terminal device is connected to the second network device may be understood as that the terminal device is connected to a first cell in the second network device. In other words, the first cell is a serving cell of the terminal device before the connection failure occurs.

That the terminal device is connected to the first network device may be understood as that the terminal device is connected to a second cell in the first network device. In other words, the second cell is a serving cell of the terminal device after the terminal device is reconnected.

Optionally, the terminal device and the network device may communicate with each other through a Uu interface.

Optionally, the network device is a device that connects a terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; may be a next generation NodeB (next generation NodeB, gNodeB or gNB) in a 5G system; may be a next generation base station in a 6G system; may be a transmission reception point (transmission reception point, TRP); may be a base station in a future evolved public land mobile network (public land mobile network, PLMN); may be a broadband network gateway (broadband network gateway, BNG), an aggregation switch, or a non-3GPP access device; may be a radio controller in a cloud radio access network (cloud radio access network, CRAN); may be an access point (access point, AP) in a Wi-Fi system; may be a wireless relay node or a wireless backhaul node; or may be a device for implementing a base station function in IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), an indoor base station, a relay station, an access point, and a donor node. This is not specifically limited in embodiments of this application.

Optionally, in a specific implementation, the network device may be a module or a unit that completes some functions of the base station, for example, a central unit (central unit, CU), or the network device may include a CU and a distributed unit (distributed unit, DU). Division may be performed on the CU and the DU based on protocol layers of the wireless network. For example, functions of an RRC protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a MAC layer, and a PHY layer are set in the DU.

It may be understood that division into processing functions of the CU and the DU based on the protocol layers is merely an example, and division may alternatively be performed in another manner. This is not specifically limited in embodiments of this application.

In some embodiments, the CU may include a CU control plane (CU control plane, CU-CP) and a CU user plane (CU user plane, CU-UP).

Optionally, the terminal device may be a user side device having a wireless transceiver function, and may send a signal to the network device, or receive a signal from the network device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be widely used in various scenarios, for example, may be a wireless terminal in IoT, D2D, M2M, MTC, a 5G network, or a future evolved PLMN. The terminal device may be deployed in the air (for example, on an airplane, a balloon, or a satellite).

For example, the terminal device may be an uncrewed aerial vehicle, a helicopter, a mechanical arm, an IoT device (for example, a sensor, an electricity meter, or a water meter), a V2X device, a station (station, ST) in a wireless local area network (wireless local area network, WLAN), a cellular phone, a cordless phone, a session start protocol (session initiation protocol, SIP) phone, a wireless local loop (wireless local loop, WLL) station, a personal digital processing (personal digital assistant, PDA) device, a handheld device with a wireless communication function, a computing device or another processing device connected to a wireless modem, a wearable device (which may also be referred to as a wearable smart device), a tablet computer or a computer with a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a wireless device in a smarthome control system (smarthome control system, SCS), a wireless device in a smart office (office automation, OA), an uncrewed aerial vehicle having a UAV to UAV (UAV to UAV, U2U) communication capability, and the like.

In this embodiment of this application, a function of the network device may be performed by a module (for example, a chip) in the network device, or may be performed by a control subsystem including a function of the network device. The control subsystem including the function of the network device may be a control center in the foregoing application scenarios such as a smart grid, industrial control, smart transportation, and smart city. A function of the terminal device may also be performed by a module (for example, a chip or a modem) in the terminal device, or may be performed by an apparatus including a function of the terminal device.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

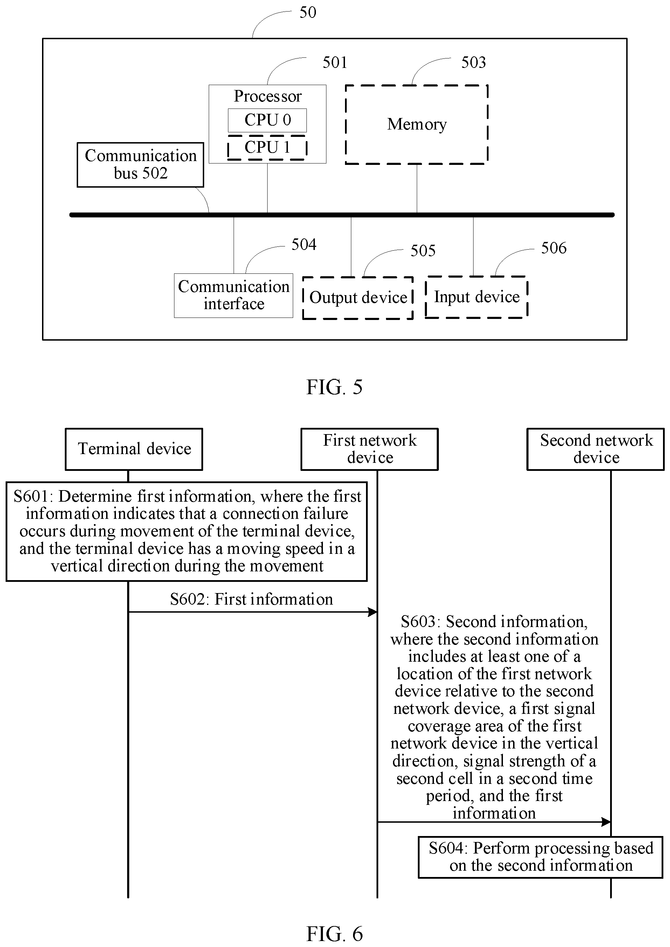

Optionally, related functions of the terminal device or the network device in this application may be implemented through a communication apparatus 50 in FIG. 5. Refer to FIG. 5. The communication apparatus 50 includes one or more processors 501. Further, the communication apparatus 50 may further include a communication bus 502 and at least one communication interface (where FIG. 5 is merely an example, and an example in which the communication apparatus 50 includes a communication interface 504 and one processor 501 is used for description). Optionally, the communication apparatus 50 may further include a memory 503.

The processor 501 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

In a specific implementation, in an embodiment, the processor 501 may include one or more CPUs, for example, a CPU 0 and a CPU 1 in FIG. 5.

The communication bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for indication in FIG. 5, but it does not indicate that there is only one bus or only one type of bus. The communication bus 502 is configured to be connected to different components in the communication apparatus 50, so that the different components in the communication apparatus 50 may communicate and interact with each other.

The communication interface 504 may be a transceiver module, and is configured to communicate with another device or a communication network. The communication network may be, for example, an Ethernet (Ethernet), a RAN, or a wireless local area network (wireless local area networks, WLAN). For example, the communication interface 504 may be an apparatus, for example, a transceiver or a transceiver machine. Alternatively, the communication interface 504 may be a transceiver circuit located in the processor 501, and is configured to implement signal input and signal output of the processor.

The memory 503 may be an apparatus with a storage function. The memory 503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be configured to carry or store expected program code in the form of an instruction or a data structure and that can be accessible by a computer, but is not limited thereto. The memory may exist independently, and is connected to the processor via the communication bus 502. The memory may alternatively be integrated with the processor.

The memory 503 is configured to store computer-executable instructions for executing the solutions in this application under control of the processor 501. The processor 501 is configured to execute the computer-executable instructions stored in the memory 503, to implement the method provided in this embodiment of this application.

Alternatively, optionally, in this embodiment of this application, the processor 501 may perform a processing-related function in a method provided in the following embodiments of this application, and the communication interface 504 is responsible for communication with another device or a communication network. This is not specifically limited in this embodiment of this application.

Optionally, the computer-executable instructions in this embodiment of this application may also be referred to as application program code. This is not specifically limited in this embodiment of this application.

In a specific implementation, in an embodiment, the communication apparatus 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, a sensor device, or the like.

It should be noted that, the composition structure shown in FIG. 5 does not constitute a limitation on the communication apparatus. In addition to the components shown in FIG. 5, the communication apparatus may include more or fewer components than those shown in the figure, combine some components, or have different component arrangements.

With reference to the accompanying drawings, the following describes in detail the data transmission method provided in embodiments of this application. It may be understood that in embodiments of this application, the network device may perform some or all of the steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

FIG. 6 shows a data transmission method according to this application. The data transmission method includes the following steps.

S601: A terminal device determines first information.

The first information indicates that a connection failure occurs during movement of the terminal device, and the terminal device has a moving speed in a vertical direction during the movement.

Optionally, the connection failure may include an RLF or a handover failure.

Optionally, the first information includes at least one of the following:

### (1) Location information of the terminal device when the connection failure occurs

Optionally, the location information of the terminal device may be an absolute location of the terminal device in two-dimensional space, or may be a location of the terminal device relative to a second network device in two-dimensional space.

Optionally, when the location information of the terminal device is an absolute location of the terminal device in two-dimensional space, the location information of the terminal device may include coordinates of the terminal device in a longitude and latitude coordinate system.

For example, the location information of the terminal device may be represented in a related manner of location information (location information) specified in a protocol (for example, a 3GPP protocol).

Optionally, when the location information of the terminal device is the location of the terminal device relative to the second network device in the two-dimensional space, the location information of the terminal device may include the location of the terminal device relative to the second network device.

For example, the location information of the terminal device may be represented by a relative distance between the terminal device and the second network device in a horizontal direction.

Optionally, the location information of the terminal device may be determined by the terminal device, or may be determined and notified by the second network device to the terminal device.

For example, the terminal device may calculate the relative distance between the terminal device and the second network device in the horizontal direction based on time for data transmission between the terminal device and the second network device, to determine the location information of the terminal device.

Alternatively, the second network device may calculate the relative distance between the second network device and the terminal device in the horizontal direction based on the coordinates of the terminal device in the longitude and latitude coordinate system, to determine the location information of the terminal device, and send the location information of the terminal device to the terminal device.

### (2) Moving speed of the terminal device when the connection failure occurs

Optionally, the moving speed of the terminal device may be a speed of the terminal device in a vertical direction, or may be a speed of the terminal device in a horizontal direction.

### (3) Height information of the terminal device when the connection failure occurs

In a possible implementation, the height information of the terminal device may include a height of the terminal device relative to the second network device, for example, a height difference between the terminal device and the second network device.

For example, when a height of the terminal device is 50 meters, and a height of the second network device is 60 meters, the height of the terminal device relative to the second network device may be -10 meters. When the height of the terminal device is 60 meters, and the height of the second network device is 50 meters, the height of the terminal device relative to the second network device may be 10 meters.

In another possible implementation, the height information of the terminal device may include an absolute height, for example, an altitude, of the terminal device.

### (4) Moving trajectory of the terminal device

For example, the moving trajectory may be preset by the terminal device or the second network device. The terminal device may move based on the moving trajectory.

### (5) Signal quality of a first cell in a first time period where an end moment of the first time period is a moment at which the connection failure occurs

In a possible implementation, a start moment of the first time period may be a preset moment. For example, the preset moment may be a 10th second (second, s) before a moment at which the connection failure occurs.

In another possible implementation, the start moment of the first time period may be determined based on a signal quality threshold that causes the connection failure.

Optionally, a moment at which the signal quality of the first cell is less than the signal quality threshold that causes the connection failure is determined as the start moment of the first time period.

For example, when signal quality of the first cell at a moment A is less than the signal quality threshold causing the connection failure, any moment from the moment A to a moment B (excluding the moment B) may be determined as the start moment of the first time period. The moment B is a moment at which the connection failure occurs, and the moment A is a moment before the connection failure occurs. For example, duration of the first time period may be 10s.

It should be noted that the foregoing is merely an example description of the first time period. Actually, the duration of the first time period may be longer or shorter. For example, the duration of the first time period may be 5s. This is not specifically limited in this application.

Optionally, in the first time period, the terminal device may determine the signal quality of the first cell by using a second or a millisecond (millisecond, ms) as a period, for example, determine the signal quality of the first cell once every second or every millisecond. This is not limited in this application.

### (6) Cell triggered list, where the cell triggered list includes an identifier of a cell that satisfies a preset condition

Optionally, the preset condition may be a trigger event for measurement reporting. For example, the preset condition may be an event A1, an event A2, an event A3, an event A4, an event A5, an event H1, an event H2, or the like. For the events A1 to A5, refer to the foregoing definitions. The event H1 is that the height of the terminal device is greater than a fourth preset threshold, and the event H2 is that the height of the terminal device is less than a fifth preset threshold.

### (7) Identifier of a cell that is in a neighboring cell of the first cell and that satisfies the preset condition

Optionally, identities of cells that satisfy the preset condition may form a cell triggered list.

### (8) Handover type of last handover of the terminal device, where the handover type is vertical handover.

Optionally, the last handover may be understood as handover that should be performed by the terminal device but is not actually performed before the connection failure occurs.

Optionally, the connection failure may be caused by the fact that the terminal device should perform cell handover but actually does not perform handover in time (in other words, the handover is delayed). The handover that should be performed by the terminal device may include: The terminal device sends a measurement report to the second network device. The second network device determines a target network device based on the measurement report, and sends a handover request to the target network device. After receiving the handover request, the target network device performs admission control. When the terminal device can access the target network device, the target network device sends handover acknowledgement information to the second network device. The handover acknowledgement information includes RRC reconfiguration information of the terminal device. The second network device forwards the handover acknowledgement information to the terminal device. The terminal device performs handover based on the handover acknowledgement information. However, because the terminal device fails to report the measurement report in advance, the second network device fails to determine, based on the measurement report in time, that the terminal device needs to be handed over, and the like, the terminal device fails to be handed over in time, and a connection failure occurs.

The vertical handover may be understood as that a signal coverage area of a serving cell (or a source cell and a target cell) of the terminal device in a vertical direction varies before and after the handover. For example, upper height limits of signal coverage areas of the second network device and a third network device in the vertical direction are different; or lower height limits of signal coverage areas of the second network device and the third network device in the vertical direction are different.

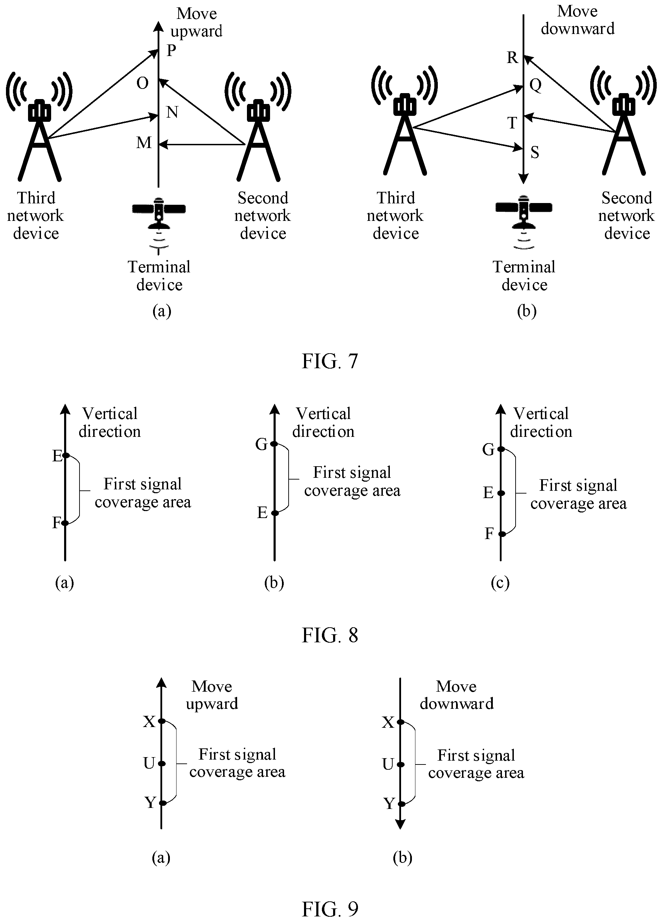

For example, as shown in (a) in FIG. 7, a signal coverage area of the second network device in the vertical direction is [M, O], and a signal coverage area of the third network device in the vertical direction is [N, P]. When the terminal device moves upward, in a process of moving from a point M to a point O, the second network device provides a service for the terminal device, in other words, the terminal device is connected to the second network device. Because the upper height limit of the signal coverage area of the third network device in the vertical direction is greater than the upper height limit of the signal coverage area of the second network device in the vertical direction, in a process of moving from the point O to a point P, the third network device needs to provide a service for the terminal device, in other words, the terminal device needs to be connected to the third network device. Therefore, the terminal device needs to be handed over from the second network device to the third network device when the terminal device is close to the point O or at the point O. A type of the handover may be referred to as vertical handover.

Alternatively, as shown in (b) in FIG. 7, a signal coverage area of the second network device in the vertical direction is [T, R], and a signal coverage area of the third network device in the vertical direction is [S, Q]. When the terminal device moves downward, in a process of moving from a point R to a point T, the second network device provides a service for the terminal device, in other words, the terminal device is connected to the second network device. Because a lower height limit of the signal coverage area of the third network device in the vertical direction is less than a lower height limit of the signal coverage area of the second network device in the vertical direction, in a process of moving from the point T to a point S, the third network device needs to provide a service for the terminal device, in other words, the terminal device needs to be connected to the third network device. Therefore, the terminal device needs to be handed over from the second network device to the third network device when the terminal device is close to the point T or at the point T. A type of the handover may be referred to as vertical handover.

Based on this solution, the second network device determines, based on the handover type, that a scenario in which the connection failure occurs during movement of the terminal device is that the terminal device has a moving speed in a vertical direction. For example, the terminal device moves in the vertical direction. In this case, network optimization can be performed based on the scenario, to implement network optimization in a scenario in which the connection failure occurs in a process in which the terminal device moves at the moving speed in the vertical direction.

S602: The terminal device sends the first information to a first network device. Correspondingly, the first network device receives the first information from the terminal device.

Optionally, the terminal device may send the first information to the first network device after establishing a connection to the first network device.

Optionally, the first information may be carried in an RLF report.

S603: The first network device sends second information to the second network device. Correspondingly, the second network device receives the second information from the first network device.

Optionally, the second information may be used by the second network device to analyze a cause of the connection failure; and/or the second information may be used by the second network device to perform network optimization based on the connection failure.

Optionally, after receiving the first information, the first network device sends the second information to the second network device. In other words, an action of sending the second information by the first network device to the second network device may be triggered by receiving the first information by the first network device.

Optionally, the second information may be carried in RLF indication information.

The second information includes at least one of the following:

### (1) Location of the first network device relative to the second network device

Optionally, the location of the first network device relative to the second network device may be understood as a location of the first network device relative to the second network device in three-dimensional space.

In a possible implementation, the location of the first network device relative to the second network device may include a height of the first network device relative to the second network device.

For example, when a height of the first network device is 50 meters, and a height of the second network device is 60 meters, the height of the first network device relative to the second network device may be -10 meters. When the height of the first network device is 60 meters, and the height of the second network device is 50 meters, the height of the first network device relative to the second network device may be 10 meters.

In another possible implementation, the location of the first network device relative to the second network device may include three-dimensional coordinates of the first network device relative to the second network device.

For example, the three-dimensional coordinates include longitude, latitude, and height. When three-dimensional coordinates of the first network device are 30 degrees east longitude, 30 degrees south latitude, and at a height of 50 meters, and three-dimensional coordinates of the second network device are 31 degrees east longitude, 31 degrees south latitude, and at a height of 60 meters, the location of the first network device relative to the second network device may be 1 degree west longitude, 1 degree north latitude, and at a height of -10 meters.

### (2) First signal coverage area of the first network device in a vertical direction When a connection failure occurs, the terminal device is located in the first signal coverage area.

Optionally, because the terminal device is located in the first signal coverage area when the connection failure occurs, the first signal coverage area may be understood as an area in which the connection failure easily occurs on the terminal device.

For example, an upper height limit of the first signal coverage area may be a height at which the terminal device is located at a moment at which the connection failure occurs. As shown in (a) in FIG. 8, a point E is the height at which the terminal device is located at the moment at which the connection failure occurs. Therefore, the point E is an upper height limit of the first signal coverage area. In addition, a point F is a lower height limit of the first signal coverage area, in other words, a range from the point E to the point F is the first signal coverage area.

Alternatively, a lower height limit of the first signal coverage area may be the height at which the terminal device is located at the moment at which the connection failure occurs. As shown in (b) in FIG. 8, a point E is the height at which the terminal device is located at the moment at which the connection failure occurs. Therefore, the point E is a lower height limit of the first signal coverage area. In addition, a point G is an upper height limit of the first signal coverage area, in other words, a range from the point E to the point G in a vertical direction is the first signal coverage area.

Alternatively, the height at which the terminal device is located at the moment at which the connection failure occurs is within the first signal coverage area. As shown in (c) in FIG. 8, a point E is the height of the terminal device at the moment at which the connection failure occurs, a point G is an upper height limit of the first signal coverage area, and a point F is a lower height limit of the first signal coverage area. Therefore, a range from the point F to the point G in the vertical direction is the first signal coverage area.

Optionally, the first signal coverage area is located in a signal coverage area of the first network device. The upper height limit of the first signal coverage area is less than or equal to an upper height limit of the signal coverage area of the first network device, and the lower height limit of the first signal coverage area is less than or equal to a lower height limit of the signal coverage area of the first network device.

For example, the height of the terminal device at the moment at which the connection failure occurs is within the first signal coverage area, and the height of the terminal device at the moment at which the connection failure occurs is 55 meters. When the signal coverage area of the first network device is [5, 100] meters, a signal coverage area within a height range of [50, 60] meters in the signal coverage area of the first network device may be determined as the first signal coverage area.

For example, the signal coverage area of the first network device in the vertical direction may be determined through a drive test when the first network device is deployed.

### (3) Signal strength of a second cell in a second time period, where the second time period includes a moment at which the terminal device is connected to the second cell.

Optionally, the moment at which the terminal device is connected to the second cell may be understood as a moment at which the terminal device is successfully connected to the second cell.

Optionally, a start moment of the second time period may be a moment at which a connection failure occurs.

Optionally, an end moment of the second time period is less than or equal to a preset moment threshold. For example, the preset moment threshold may be 10s after the connection failure occurs.

It should be noted that the foregoing is merely an example description of the second time period, and does not mean that duration of the second time period is only 10s. Actually, the duration of the second time period may be longer or shorter. This is not specifically limited in this application.

Optionally, in the second time period, the terminal device or the first network device may determine the signal strength of the second cell by using a second or a millisecond as a period, for example, determine the signal strength of the second cell once every second or every millisecond. This is not limited in this application.

Optionally, a manner of determining the signal strength of the second cell in the second time period may include the following two manners.

In a possible implementation, the signal strength of the second cell in the second time period may be determined and notified by the terminal device to the first network device.

For example, the first network device may send first indication information to the terminal device. The first indication information indicates the terminal device to measure the signal strength of the second cell in the second time period. The terminal device measures the signal strength of the second cell in the second time period based on the first indication information, and reports the signal strength to the first network device.

In another possible implementation, the first network device may estimate the signal strength of the second cell in the second time period based on a location of the terminal device in the second time period.

For example, the first network device estimates the signal strength of the second cell in the second time period based on a distance between the first network device and the terminal device in the second time period. For example, the first network device obtains path losses during signal propagation based on the distance between the first network device and the terminal device in the second time period, to further determine the signal strength of the second cell in the second time period.

Optionally, the terminal device sends the signal strength of the second cell in the second time period to the first network device at the end moment of the second time period.

### (4) First information, where for the first information, refer to related descriptions in step S601. Details are not described herein again.

S604: The second network device performs processing based on the second information.

In a first possible implementation, when the second information includes the first information, and the first information includes the moving trajectory of the terminal device, the second network device may determine, based on the first information when the connection failure occurs, whether the terminal device is in an area without signal coverage.

Optionally, when the connection failure occurs, and the terminal device is in an area without signal coverage, the second network device may determine that the connection failure is caused due to movement of the terminal device to the area without signal coverage. When the connection failure occurs, and the terminal device is not in an area without signal coverage, the second network device may determine that the connection failure is not caused due to movement of the terminal device to the area without signal coverage.

For example, when the connection failure occurs because the terminal device moves to the area without signal coverage, the second network device may adjust a signal coverage area and/or a beam direction of the second network device based on a moving trajectory. Therefore, the signal coverage area of the second network device includes the area without signal coverage.

Based on the possible implementation, the second network device may analyze, based on the moving trajectory of the terminal device, whether the connection failure occurs because the terminal device moves to an area in which a signal cannot be provided. When the connection failure occurs because the terminal device moves to an area in which a signal cannot be provided, the second network device may perform network optimization based on the cause. When the connection failure is not caused by a case that the terminal device moves to an area in which a signal cannot be provided, the second network device may exclude the case that the connection failure occurs because the terminal device moves to the area in which signal coverage cannot be provided, to increase a probability that the second network device obtains a correct cause of the connection failure, so that the second network device can perform network optimization based on the correct cause.

Optionally, the second network device may further determine, based on the moving trajectory of the terminal device, whether the terminal device is in a no-fly zone when the connection failure occurs.

Optionally, when the terminal device is in the no-fly zone when the connection failure occurs, the second network device may determine that the connection failure is caused by a case that the terminal device moves to the no-fly zone. When the connection failure occurs, and the terminal device is not in the area without signal coverage, the second network device may determine that the connection failure is not caused by a case that the terminal device moves to the no-fly zone.

Based on the possible implementation, the second network device may analyze, based on the moving trajectory of the terminal device, whether the connection failure occurs because the terminal device moves to the no-fly zone. When the connection failure is not caused by a case that the terminal device moves to the no-fly zone, the second network device may exclude a case in which the connection failure occurs because the terminal device moves to the no-fly zone, to increase a probability that the second network device obtains a correct cause of the connection failure, so that the second network device can perform network optimization based on the correct cause.

In a second possible implementation, when the second information includes the first information, and the first information includes the signal quality of the first cell in the first time period, the second network device compares the signal quality of the first cell in the first time period with a signal quality threshold that causes the connection failure.

When the signal quality of the first cell in the first time period is less than the signal quality threshold that causes the connection failure, the second network device determines that the connection failure may occur because the signal quality of the first cell in the first time period is poor. When the signal quality of the first cell in the first time period is greater than or equal to the signal quality threshold that causes the connection failure, the second network device determines that the connection failure is not caused by poor signal quality of the first cell in the first time period.

Optionally, when the signal quality of the first cell in the first time period is less than the signal quality threshold that causes the connection failure, the second network device may improve the signal quality of the first cell in the first time period.

For example, the second network device may adjust transmit power of a signal, to improve the signal quality of the first cell in the first time period.

Based on the possible implementation, the second network device can analyze, based on the signal quality of the first cell in the first time period, whether the connection failure occurs due to signal quality deterioration. When the connection failure occurs due to the signal quality deterioration, the second network device can perform network optimization based on the signal quality of the first cell in the first time period. For example, the second network device may improve the signal quality of the first cell, to ensure normal communication between the terminal device and the second network device subsequently, and avoid the connection failure.

In a third possible implementation, when the second information includes the first information, and the first information includes at least one of the cell triggered list and the identifier of the cell that is in the neighboring cell of the first cell and that satisfies the preset condition, the second network device may compare a first quantity with a preset quantity threshold. The preset quantity threshold is used for triggering the terminal device to perform reporting.

When the first quantity is less than the preset quantity threshold, the second network device determines that the connection failure occurs because the terminal device does not perform reporting, in other words, the terminal device does not report the measurement report in time. When the first quantity is greater than or equal to the preset quantity threshold, the second network device determines that the connection failure is not caused by a case that the terminal device does not trigger reporting. The first quantity is a quantity of identities of cells that satisfy the preset condition.

Optionally, when the first quantity is less than the preset quantity threshold, the second network device may reduce the preset quantity threshold. Alternatively, the second network device may reduce duration of TTT.

Based on the possible implementation, the second network device can analyze, based on the first quantity and the preset quantity threshold, whether the connection failure occurs because the terminal device does not trigger reporting. When the connection failure occurs because the terminal device does not trigger reporting, the second network device may perform network optimization based on the cause in which the terminal device does not trigger reporting. For example, the second network device may reduce a threshold (for example, reduce the preset quantity threshold or reduce duration of TTT) for triggering reporting by the terminal device, to increase frequency of triggering reporting by the terminal device. In this case, the terminal device can report a measurement result in time, to further avoid the connection failure of the terminal device. When the connection failure is not caused by a case that the terminal device does not trigger reporting, the second network device may exclude the cause in which the terminal device does not trigger reporting, to increase a probability that the second network device obtains a correct cause of the connection failure, so that the second network device can perform network optimization based on the correct cause.

In a fourth possible implementation, when the second information includes the location of the first network device relative to the second network device, the second network device may adjust the signal coverage area of the second network device. An adjusted signal coverage area of the second network device includes a height of a highest point of the first network device.

Optionally, the second network device may adjust the signal coverage area of the second network device by adjusting a beam direction of the second network device.

For example, the second network device may adjust the beam direction of the second network device based on the height of the first network device relative to the second network device.

Alternatively, the second network device may determine a direction of the first network device relative to the second network device based on the three-dimensional coordinates of the first network device relative to the second network device, and adjust the beam direction based on the direction.

Based on the possible implementation, during movement of the terminal device, the connection failure easily occurs when the terminal device passes through a highest point of a network device (for example, the first network device). Therefore, the second network device can adjust the beam direction of the second network device, so that the signal coverage area of the second network device can include the height of the highest point of the first network device. In this way, when the terminal device passes through the highest point of the first network device, the terminal device can keep communication with the second network device, and can send the measurement report to the second network device in time, so that the second network device can indicate handover in time, to avoid the connection failure.

In a fifth possible implementation, when the second information includes the location of the first network device relative to the second network device, the second network device may send the handover acknowledgement information to the terminal device based on the location of the first network device relative to the second network device, to indicate the terminal device to perform handover.

Optionally, the second network device may determine a location of the highest point of the first network device based on the location of the first network device relative to the second network device, and send the handover acknowledgement information to the terminal device based on the location of the highest point.

Optionally, the second network device may set a first trigger mechanism. In the first trigger mechanism, when the terminal device moves to the highest point of the first network device or is close to the highest point of the first network device, the second network device sends the handover acknowledgement information to the terminal device.

Based on the possible implementation, during movement of the terminal device, the connection failure easily occurs when the terminal device passes through a height corresponding to the highest point of the network device (for example, the first network device). Therefore, the second network device may set the first trigger mechanism, so that when the terminal device passes through the highest point of the first network device, regardless of whether the second network device receives the measurement report from the terminal device, the second network device sends the handover acknowledgement information to the terminal device, to avoid the connection failure caused because the terminal fails to report the measurement result in advance.

In a sixth possible implementation, when the second information includes the first signal coverage area, the second network device may adjust the signal coverage area of the second network device. An adjusted signal coverage area of the second network device includes the first signal coverage area.

Optionally, the second network device may adjust the signal coverage area of the second network device by adjusting a beam direction of the second network device.

Optionally, the second network device may adjust the beam direction of the second network device upward or downward based on the upper height limit or the lower height limit of the first signal coverage area.

For example, as shown in FIG. 9, a point U is a height at which the terminal device is located when the connection failure occurs, and the first signal coverage area is [X, Y]. Therefore, as shown in (a) in FIG. 9, in a process in which the terminal device moves upward, the second network device may adjust the beam direction of the second network device upward based on an upper height limit point X of the first signal coverage area. As shown in (b) in FIG. 9, in a process in which the terminal device moves downward, the second network device may adjust the beam direction of the second network device downward based on a lower height limit point Y of the first signal coverage area.

In a seventh possible implementation, when the second information includes the first signal coverage area, the second network device may send the handover acknowledgement information to the terminal device based on the first signal coverage area, to indicate the terminal device to perform handover.

Optionally, in a process in which the terminal device moves upward, the second network device may set a second trigger mechanism. The second trigger mechanism indicates the second network device to send the handover acknowledgement information to the terminal device when the terminal device moves to the lower height limit of the first signal coverage area, and the handover acknowledgement information indicates the terminal device to be handed over to the first network device.

Alternatively, in a process in which the terminal device moves downward, the second network device may set a third trigger mechanism. The second trigger mechanism indicates the second network device to send the handover acknowledgement information to the terminal device when the terminal device moves to the upper height limit of the first signal coverage area, and the handover acknowledgement information indicates the terminal device to be handed over to the first network device.

For example, as shown in (a) in FIG. 9, in the process in which the terminal device moves upward, when the terminal device moves to the lower height limit point Y of the first signal coverage area, the second trigger mechanism is triggered. The second network device sends the handover acknowledgement information to the terminal device, and the handover acknowledgement information indicates the terminal device to be handed over to the first network device.

As shown in (b) in FIG. 9, in the process in which the terminal device moves downward, when the terminal device moves to the upper height limit point X of the first signal coverage area, the third trigger mechanism is triggered. The second network device sends the handover acknowledgement information to the terminal device, and the handover acknowledgement information indicates the terminal device to be handed over to the first network device.

Based on the possible implementation, an area in which the terminal device may be located when the connection failure occurs can be determined, so that the second network device performs network optimization based on the first signal coverage area, to avoid the connection failure caused because the terminal fails to report the measurement result in advance.

Based on the data transmission method, the terminal device may send the first information to the first network device, so that the first network device can learn that the terminal device has the moving speed in the vertical direction and the connection failure occurs during movement. Therefore, the first network device can send, to a network device to which the terminal device is connected before the connection failure occurs, information related to the connection failure scenario, to help the network device to which the terminal device is connected before the connection failure occurs perform network optimization for the scenario.

The foregoing uses an example in which the second network device performs network optimization for description. Actually, a core network may further perform network optimization. To be specific, after receiving the first information, the first network device sends the second information to the core network, so that the core network can perform processing based on the second information and notify the second network device. For a process in which the core network performs network optimization, refer to a process in which the second network device performs network optimization. Details are not described in this application.

It may be understood that, in the foregoing embodiments, the methods and/or the steps implemented by the network device (for example, the first network device or the second network device) may alternatively be implemented by a component (for example, a processor, a chip, a chip system, a circuit, a logical module, or software like a chip or a circuit) that can be used in the network device. The methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the foregoing terminal device, or a component that can be used in the terminal device, for example, a chip or a chip system. Alternatively, the communication apparatus may be the network device in the foregoing method embodiments, an apparatus including the foregoing network device, or a component that can be used in a network device, for example, a chip or a chip system. The communication apparatus may include modules or units configured to implement the foregoing data transmission method. Only main steps of the solution are described below. For specific details, refer to the foregoing method embodiments. Details are not described below again.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used.

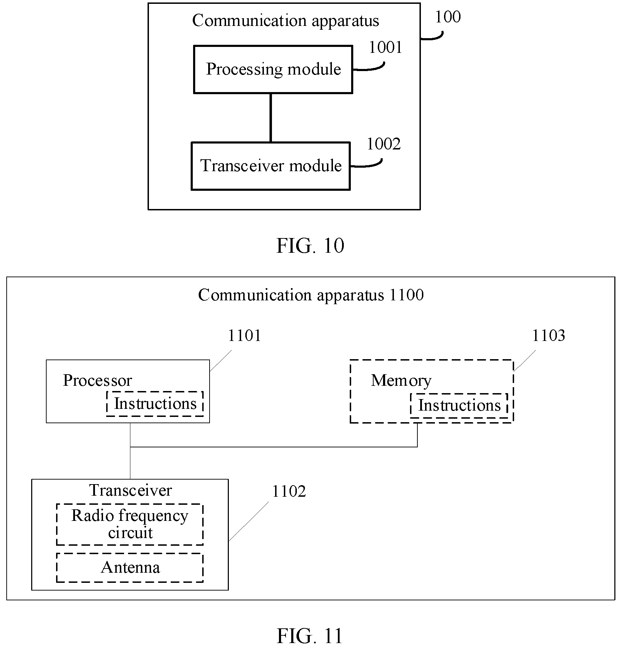

FIG. 10 is a diagram of a structure of a communication apparatus 100. The communication apparatus 100 includes a processing module 1001 and a transceiver module 1002. The communication apparatus 100 may be configured to implement functions of the foregoing network device or terminal device.

In some embodiments, the communication apparatus 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving and sending steps performed by the network device or the terminal device in the foregoing method embodiments, and/or configured to support another process of the technology described in this specification. The processing module 1001 may be configured to perform processing (for example, determining or generation) steps performed by the network device or the terminal device in the foregoing method embodiments, and/or configured to support another process of the technology described in this specification.

When the communication apparatus 100 is configured to implement functions of the terminal device:

In some embodiments, the processing module 1001 is configured to determine first information. The first information indicates that a connection failure occurs during movement of the terminal device, and the terminal device has a moving speed in a vertical direction during the movement. The transceiver module 1002 is configured to send the first information to a first network device. The first network device is a network device to which the terminal device is reconnected after the connection failure occurs.

Optionally, the first information includes at least one of location information, moving speed, and height information of the terminal device when the connection failure occurs.

Optionally, the location information includes a location of the terminal device relative to a second network device, and the second network device is a network device to which the terminal device is connected before the connection failure occurs; or the location information includes coordinates of the terminal device in a longitude and latitude coordinate system.

Optionally, the height information includes a height of the terminal device relative to the second network device, or the height information includes an absolute height of the terminal device.

Optionally, the first information includes a moving trajectory of the terminal device.

Optionally, the first information includes signal quality of a first cell in a first time period, the first cell is a serving cell of the terminal device before the connection failure occurs, and an end moment of the first time period is a moment at which the connection failure occurs.

Optionally, the first information includes an identifier of a cell that is in a neighboring cell of the first cell and that satisfies a preset condition.

Optionally, the first information includes a cell triggered list, and the cell triggered list includes an identifier of a cell that satisfies the preset condition.

Optionally, the first information includes a handover type of last handover of the terminal device. The handover type is vertical handover.

When the communication apparatus 100 is configured to implement functions of the first network device:

In some embodiments, the transceiver module 1002 is configured to receive first information from the terminal device. The first information indicates that a connection failure occurs during movement of the terminal device, and the terminal device has a moving speed in a vertical direction during the movement. The transceiver module 1002 is further configured to send second information to a second network device, where the second information includes at least one of a location of the first network device relative to the second network device, a first signal coverage area of the first network device in the vertical direction, signal strength of a second cell in a second time period, and the first information.

The second network device is a network device to which the terminal device is connected before the connection failure occurs, the terminal device is located in the first signal coverage area when the connection failure occurs, the second cell is a serving cell to which the terminal device is reconnected after the connection failure occurs, and the second time period includes a moment at which the terminal device is connected to the second cell.

Optionally, the first information includes at least one of location information, moving speed, and height information of the terminal device when the connection failure occurs.

Optionally, the location information includes a location of the terminal device relative to a second network device, and the second network device is a network device to which the terminal device is connected before the connection failure occurs; or the location information includes coordinates of the terminal device in a longitude and latitude coordinate system.

Optionally, the height information includes a height of the terminal device relative to the second network device, or the height information includes an absolute height of the terminal device.

Optionally, the first information includes a moving trajectory of the terminal device.

Optionally, the first information includes signal quality of a first cell in a first time period, the first cell is a serving cell of the terminal device before the connection failure occurs, and an end moment of the first time period is a moment at which the connection failure occurs.

Optionally, the first information includes an identifier of a cell that is in a neighboring cell of the first cell and that satisfies a preset condition.

Optionally, the first information includes a cell triggered list, and the cell triggered list includes an identifier of a cell that satisfies the preset condition.

Optionally, the first information includes a handover type of last handover of the terminal device. The handover type is vertical handover.

All related content of the steps in the foregoing method embodiments may be cited in function descriptions of the corresponding functional modules. Details are not described herein again.

When the communication apparatus 100 is configured to implement functions of the second network device:

In some embodiments, the transceiver module 1002 is configured to receive second information from a first network device. The first network device is a network device to which a terminal device is reconnected after a connection failure occurs, and the second network device is a network device to which the terminal device is connected before the connection failure occurs. The second information includes at least one of a location of the first network device relative to the second network device, a first signal coverage area of the first network device in a vertical direction, signal strength of a second cell in a second time period, and first information. The processing module 1001 is configured to perform processing based on the second information.

The terminal device is located in the first signal coverage area when the connection failure occurs, the second cell is a serving cell to which the terminal device is reconnected after the connection failure occurs, and the second time period includes a moment at which the terminal device is connected to the second cell.

Optionally, the first information includes at least one of location information, moving speed, and height information of the terminal device when the connection failure occurs.

Optionally, the location information includes a location of the terminal device relative to a second network device, and the second network device is a network device to which the terminal device is connected before the connection failure occurs; or the location information includes coordinates of the terminal device in a longitude and latitude coordinate system.

Optionally, the height information includes a height of the terminal device relative to the second network device, or the height information includes an absolute height of the terminal device.

Optionally, the first information includes a moving trajectory of the terminal device.

Optionally, the first information includes signal quality of a first cell in a first time period, the first cell is a serving cell of the terminal device before the connection failure occurs, and an end moment of the first time period is a moment at which the connection failure occurs.

Optionally, the first information includes an identifier of a cell that is in a neighboring cell of the first cell and that satisfies a preset condition.

Optionally, the first information includes a cell triggered list, and the cell triggered list includes an identifier of a cell that satisfies the preset condition.

Optionally, the first information includes a handover type of last handover of the terminal device. The handover type is vertical handover.

All related content of the steps in the foregoing method embodiments may be cited in function descriptions of the corresponding functional modules. Details are not described herein again.

In this application, the communication apparatus 100 may be presented in the form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 100 in FIG. 10 is a chip or a chip system, a function/implementation process of the transceiver module 1002 may be implemented through an input/output interface (or a communication interface) of the chip or the chip system, and a function/implementation process of the processing module 1001 may be implemented by using a processor (or a processing circuit) of the chip or the chip system.

Because the communication apparatus 100 provided in this embodiment may perform the foregoing methods, for a technical effect that can be achieved by the communication apparatus 100, refer to the foregoing method embodiments. Details are not described herein again.

In a possible product form, the network device or the terminal device in this embodiment of this application may be further implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In a possible product form, the network device or the terminal device in this embodiment of this application may be further implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the network device or the terminal device in this embodiment of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a terminal device, or a chip or a chip system in the terminal device; or the communication apparatus 1100 may be a network device, or a chip or a module in the network device. FIG. 11 shows only main components of the communication apparatus 1100. In addition to a processor 1101 and a transceiver 1102, the communication apparatus may further include a memory 1103 and an input/output apparatus (not shown in the figure).

Optionally, the processor 1101 is mainly configured to process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in the form of an electromagnetic wave. The input/output apparatus, such as a touchscreen, a display, or a keyboard, is mainly configured to receive data input by a user and output data to the user.

Optionally, the processor 1101, the transceiver 1102, and the memory 1103 may be connected via a communication bus.

After the communication apparatus is powered on, the processor 1101 may read the software program in the memory 1103, interpret and execute instructions of the software program, and process data of the software program. When data needs to be sent in a wireless manner, the processor 1101 performs baseband processing on the to-be-sent data, and then outputs a baseband signal to a radio frequency circuit. The radio frequency circuit performs radio frequency processing on the baseband signal, and then sends a radio frequency signal to the outside in the form of an electromagnetic wave via the antenna. When data is sent to the communication apparatus, the radio frequency circuit receives a radio frequency signal via the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 100 may be in the form of the communication apparatus 1100 shown in FIG. 11.

In an example, a function/implementation process of the processing module 1001 in FIG. 10 may be implemented by the processor 1101 in the communication apparatus 1100 shown in FIG. 11 by invoking the computer-executable instructions stored in the memory 1103. A function/implementation process of the transceiver module 1002 in FIG. 10 may be implemented by the transceiver 1102 in the communication apparatus 1100 shown in FIG. 11.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, in other words, may be located together in the same place or distributed on a plurality of network units. Parts displayed as units may be or may not be physical units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in the form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data transmission method, wherein the method is applied to a terminal device, and the method comprises:
determining first information, wherein the first information indicates that a connection failure occurs during movement of the terminal device, and the terminal device has a moving speed in a vertical direction during the movement; and
sending the first information to a first network device, wherein the first network device is a network device to which the terminal device is reconnected after the connection failure occurs.

2. The method according to claim 1, wherein the first information comprises at least one of location information, moving speed, and height information of the terminal device when the connection failure occurs.

3. The method according to claim 2, wherein the location information comprises a location of the terminal device relative to a second network device, and the second network device is a network device to which the terminal device is connected before the connection failure occurs; or
the location information comprises coordinates of the terminal device in a longitude and latitude coordinate system.

4. The method according to claim 2 or 3, wherein the height information comprises a height of the terminal device relative to the second network device, or the height information comprises an absolute height of the terminal device.

5. The method according to any one of claims 1 to 4, wherein the first information comprises a moving trajectory of the terminal device.

6. The method according to any one of claims 1 to 5, wherein the first information comprises signal quality of a first cell in a first time period, the first cell is a serving cell of the terminal device before the connection failure occurs, and an end moment of the first time period is a moment at which the connection failure occurs.

7. The method according to any one of claims 1 to 6, wherein the first information comprises an identifier of a cell that is in a neighboring cell of the first cell and that satisfies a preset condition.

8. The method according to any one of claims 1 to 7, wherein the first information comprises a cell triggered list, and the cell triggered list comprises an identifier of a cell that satisfies the preset condition.

9. A data transmission method, wherein the method is applied to a first network device, and the method comprises:
receiving first information from a terminal device, wherein the first information indicates that a connection failure occurs during movement of the terminal device, and the terminal device has a moving speed in a vertical direction during the movement; and
sending second information to a second network device, wherein the second information comprises at least one of a location of the first network device relative to the second network device, a first signal coverage area of the first network device in the vertical direction, signal strength of a second cell in a second time period, and the first information, wherein
the second network device is a network device to which the terminal device is connected before the connection failure occurs, the terminal device is located in the first signal coverage area when the connection failure occurs, the second cell is a serving cell to which the terminal device is reconnected after the connection failure occurs, and the second time period comprises a moment at which the terminal device is connected to the second cell.

10. The method according to claim 9, wherein the first information comprises at least one of location information, moving speed, and height information of the terminal device when the connection failure occurs.

11. The method according to claim 10, wherein the location information comprises a location of the terminal device relative to the second network device, and the second network device is a network device to which the terminal device is connected before the connection failure occurs; or
the location information comprises coordinates of the terminal device in a longitude and latitude coordinate system.

12. The method according to claim 10 or 11, wherein the height information comprises a height of the terminal device relative to the second network device, or the height information comprises an absolute height of the terminal device.

13. The method according to any one of claims 9 to 12, wherein the first information comprises a moving trajectory of the terminal device.

14. The method according to any one of claims 9 to 13, wherein the first information comprises signal quality of a first cell in a first time period, the first cell is a serving cell of the terminal device before the connection failure occurs, and an end moment of the first time period is a moment at which the connection failure occurs.

15. The method according to any one of claims 9 to 14, wherein the first information comprises an identifier of a cell that is in a neighboring cell of the first cell and that satisfies a preset condition.

16. The method according to any one of claims 9 to 15, wherein the first information comprises a cell triggered list, and the cell triggered list comprises an identifier of a cell that satisfies the preset condition.

17. A data transmission method, wherein the method is applied to a second network device, and the method comprises:
receiving second information from a first network device, wherein the first network device is a network device to which a terminal device is reconnected after a connection failure occurs, and the second network device is a network device to which the terminal device is connected before the connection failure occurs; and
performing processing based on the second information, wherein
the second information comprises at least one of a location of the first network device relative to the second network device, a first signal coverage area of the first network device in a vertical direction, signal strength of a second cell in a second time period, and first information, the terminal device is located in the first signal coverage area when the connection failure occurs, the second cell is a serving cell to which the terminal device is reconnected after the connection failure occurs, the second time period comprises a moment at which the terminal device is connected to the second cell, and the first information indicates that the connection failure occurs during movement of the terminal device, and the terminal device has a moving speed in the vertical direction during the movement.

18. The method according to claim 17, wherein the first information comprises at least one of location information, moving speed, and height information of the terminal device when the connection failure occurs.

19. The method according to claim 18, wherein the location information comprises a location of the terminal device relative to the second network device, and the second network device is a network device to which the terminal device is connected before the connection failure occurs; or
the location information comprises coordinates of the terminal device in a longitude and latitude coordinate system.

20. The method according to claim 18 or 19, wherein the height information comprises a height of the terminal device relative to the second network device, or the height information comprises an absolute height of the terminal device, and the second network device is a network device to which the terminal device is connected before the connection failure occurs.

21. The method according to any one of claims 17 to 20, wherein the first information comprises a moving trajectory of the terminal device.

22. The method according to any one of claims 17 to 21, wherein the first information comprises signal quality of a first cell in a first time period, the first cell is a serving cell of the terminal device before the connection failure occurs, and an end moment of the first time period is a moment at which the connection failure occurs.

23. The method according to any one of claims 17 to 22, wherein the first information comprises an identifier of a cell that is in a neighboring cell of the first cell and that satisfies a preset condition.

24. The method according to any one of claims 17 to 23, wherein the first information comprises a cell triggered list, and the cell triggered list comprises an identifier of a cell that satisfies the preset condition.

25. A communication apparatus, wherein the communication apparatus comprises a processor, and the processor is configured to run a computer program or instructions, to enable the communication apparatus to perform the method according to any one of claims 1 to 8, to enable the communication apparatus to perform the method according to any one of claims 9 to 16, or to enable the communication apparatus to perform the method according to any one of claims 17 to 24.

26. A computer-readable storage medium, wherein the computer-readable storage medium stores computer instructions or a program, and when the computer instructions or the program is run on a computer, the method according to any one of claims 1 to 8 is performed, the method according to any one of claims 9 to 16 is performed, or the method according to any one of claims 17 to 24 is performed.
